# EUROPÄISCHE PATENTSCHRIFT

(11) **EP 3 154 766 B1**
(45) Veröffentlichungstag und Bekanntmachung des Hinweises auf die Patenterteilung: **11.07.2018**
(21) Anmeldenummer: 15734583.6
(22) Anmeldetag: 15.06.2015
(51) Int. Cl.: B29C 65/16, B29C 65/18, B29C 65/24, B01D 29/01, B29L 31/14, B29K 25/00

(54) **VERFAHREN ZUM VERBINDEN EINES ERSTEN KUNSTSTOFFTEILES MIT EINEM ZWEITEN KUNSTSTOFFTEIL DURCH LASERSCHWEISSEN**
METHOD FOR CONNECTING A FIRST PLASTIC PART TO A SECOND PLASTIC PART BY LASER WELDING
PROCÉDÉ POUR ASSEMBLER UN PREMIER ÉLÉMENT PLASTIQUE AVEC UN DEUXIÈME ÉLÉMENT PLASTIQUE PAR SOUDAGE LASER

(30) Priorität: 16.06.2014 DE 102014108404
(43) Veröffentlichungstag der Anmeldung: 19.04.2017
(73) Patentinhaber: Sartorius Stedim Biotech GmbH, 37079 Göttingen (DE)
(72) Erfinder: FATHERAZI, Shahmir, 52078 Aachen (DE)
(74) Vertreter: Schneider, Peter Christian
(86) Internationale Anmeldenummer: PCT/EP2015/063328
(87) Internationale Veröffentlichungsnummer: WO 2015/193235

(56) Entgegenhaltungen:
- DD-A- 84 474
- DE-A1- 10 058 251
- DE-A1- 10 211 782
- DE-A1- 10 256 565
- JP-A- 2004 142 225
- JP-A- 2011 031 587
- JP-A- 2011 240 585
- US-A1- 2012 183 748

## Beschreibung

### Gebiet der Erfindung

Die Erfindung betrifft ein Verfahren zum Verbinden eines ersten Kunststoffteiles mit einem zweiten Kunststoffteil durch Laserschweißen, wobei beide Kunststoffteile aufeinander positioniert, in einer Spannvorrichtung mit einem transparenten Niederhalter zusammengepresst und durch Laserschweißen mit einem Laserlicht dicht miteinander verbunden werden wobei beide Kunststoffteile für das Laserlicht transparent ausgebildet sind, wobei mindestens das zweite Kunststoffteil dünn ausgebildet ist, wobei dem zweiten Kunststoffteil auf der dem ersten Kunststoffteil abgewandten Außenseite zum Schweißen eine das Laserlicht absorbierende, durch das Laserlicht nicht schmelzbare Matte vorgelagert wird, die sich nicht mit dem anliegenden zweiten Kunststoffteil verbindet und wobei das Laserlicht über das erste Kunststoffteil dem zweiten Kunststoffteil zugeführt wird.

### Stand der Technik

Insbesondere für die Verbindung von Filtermembranen mit Gehäuseunterteilen von Filtergehäusen ist Laserschweißen eine schonende Methode, mit deren Hilfe die empfindliche Membranen sich mit den Gehäuseunterteilen aus Kunststoff dicht verbinden lassen. Für die sichere Nutzung des Laserschweißens müssen bisher die Kunststoffgehäuse mit laserlichtabsorbierenden Zusatzstoffen ausgerüstet sein oder die laserabsorbierenden Stoffe müssen zwischen Membran und Kunststoffgehäuse eingebracht werden.

Laserabsorbierende Zusatzstoffe erhöhen die Herstellkosten und haben zum größten Teil keine Zulassungen im Pharma- und Medizinbereich. Diese Zusatzstoffe bewirken eine Volumenabsorption der Laserstrahlung in Kunststoffen und erhöhen somit den Bedarf an Laserleistung. Eine Schweißung mit niedriger Laserleistung ist für die Membran aber schonender. Die Zusatzstoffe machen die Komponente und damit die Endprodukte teurer. Zudem erhöhen sie auch die extrahierbaren Bestandteile in Endprodukten.

Aus der DE 102 11 782 A1 ist ein Verfahren zum Verbinden von einem Gehäuseunterteil mit einem Filter bekannt, wobei der Filter mit einem umlaufenden Randbereich auf seiner dem Gehäuseunterteil zugewandten Unterseite durch Laserschweißen dicht mit einem Auflagerand des Gehäuseteils verbunden wird. Dabei ist das Gehäuseteil aus einem thermoplastischen Kunststoff ausgebildet, der Laserlicht adsorbiert, während der Filter aus einem für Laserlicht transparenten Polymervlies ausgebildet ist. Zum Verbinden von Gehäuseunterteil und Filter wird der Filter mit seinem Randbereich auf einen Auflagerand des Gehäuseunterteils aufgesetzt und in einer Spannvorrichtung mit einem transparenten Niederhalter zusammengepresst, wobei der Randbereich des Filters durch Laserschweißen dicht mit dem Auflagerand des Gehäuseunterteils verbunden wird.

Nachteilig dabei ist, dass das Gehäuseunterteil unerwünschte absorbierende Zusatzstoffe enthalten muss.

Aus der DE 198 60 357 A1 ist ein Verfahren zum Laserschweißen von zwei Filterhalbschalen bekannt, wobei eine Filterhalbschale aus einem laserlichtdurchlässigen Kunststoff und die andere Filterhalbschale aus einem für Laserlicht undurchlässigen Kunststoff ausgebildet ist und daher ebenfalls unerwünschte, das Laserlicht absorbierende Zusatzstoffe enthalten muss.

Aus der DE 10 2006 008 776 B4 ist ein Verfahren zum Verbinden eines ersten Kunststoffteiles mit einem zweiten Kunststoffteil durch Laserschweißen bekannt, bei dem der Einsatz zusätzlicher Absorberstoffe vermieden werden soll. Dabei muss die Wellenlänge des Laserlichtes so gewählt werden, dass sie von den Kunststoffen mindestens zu 5% absorbiert wird und der Laserstrahl in Fügestelle der beiden Fügepartner fokussiert sein muss. Nachteilig dabei ist, dass ist die genaue Fokussierung, Verarbeitungsfenster sehr klein macht. Bereits eine kleine Defokussierung führt zu schlechten Schweißergebnissen. Ein weiterer Nachteil ist die Begrenzung durch die Wahl der Wellenlänge, die mindestens zu 5% durch den Kunststoff absorbiert werden muss. Dabei werden Wellenlängen über 1000 nm benötigt. Diodenlaser für diese Wellenlängen sind sehr teuer und noch nicht allgemein erhältlich.

Aus der US 2012/01 83 748 A1 und auch aus der JP 2004/050 513 A ist ein Verfahren zum Verbinden eines ersten Kunststoffteiles mit einem zweiten Kunststoffteil durch Laserschweißen bekannt. Dabei werden beide Kunststoffteile aufeinander positioniert und in einer Spannvorrichtung mit einem transparenten Niederhalter zusammengepresst und durch Laserschweißen mit einem Laserlicht miteinander verbunden. Dabei sind die beiden Kunststoffteile für das Laserlicht transparent ausgebildet. Sowohl das erste Kunststoffteil als auch das zweite Kunststoffteil sind als Folien relativ dünn ausgebildet. Dem zweiten Kunststoffteil ist auf der dem ersten Kunststoffteil abgewandten Außenseite zum Schweißen eine das Laserlicht absorbierende, durch das Laserlicht nicht schmelzbare Unterlage vorgelagert, die sich nicht mit dem anliegenden zweiten Kunststoffteil verbindet, wobei das Laserlicht über das erste Kunststoffteil dem zweiten Kunststoffteil zugeführt wird.

Die US 2012/01 83 748 A1 betrifft lediglich die Verbindung von Kunststoffmaterialein, insbesondere die Verbindung von zwei oder mehr polymeren Folien bzw. dünnen Schichten, also gleichen zum Laserschweißen geeigneten, verträglichen Kunststoffen. Aus der US 2012/01 83 748 A1 erhält der Fachmann keinen Hinweis auf die dichte Verbindung einer Filtermembran, die das zweite Kunststoffteil bildet, mit einem ersten Kunststoffteil, das bspw. als ein Gehäuseunterteil eines Filtergehäuses ausgebildet ist.

Aus der JP 2004 142225 A ist ein Verfahren zum Verbinden eines ersten bahnförmigen Kunststoffteiles mit einem zweiten bahnförmigen Kunststoffteil durch Laserschweißen, wobei beide Kunststoffteile aufeinander positioniert, in einer Spannvorrichtung mit einem transparenten Niederhalter zusammengepresst und durch Laserschweißen mit einem Laserlicht miteinander verbunden werden, bekannt. Die beiden Kunststoffteile und der Niederhalter sind für das Laserlicht transparent ausgebildet. Dem zweiten Kunststoffteil wird auf der dem ersten Kunststoffteil abgewandten Außenseite zum Schweißen ein das Laserlicht absorbierendes, durch das Laserlicht nicht schmelzbares Teil vorgelagert, das sich nicht mit dem anliegenden zweiten Kunststoffteil verbindet, wobei das Laserlicht über das erste Kunststoffteil dem zweiten Kunststoffteil zugeführt wird.

Auch die JP 2004 142225 A betrifft lediglich die Verbindung von zum Laserschweißen geeigneten Kunststoffmaterialien.

Aus der JP 2011 240585 A ist ein Verfahren zum Verbinden eines ersten Harzfilmes durch Laserschweißen mit einem zweiten Harzfilm, wobei beide Harzfilme aufeinander positioniert und durch Laserschweißen mit einem Laserlicht miteinander verbunden werden, bekannt. Dabei wird dem zweiten Harzfilm auf der dem ersten Harzfilm abgewandten Außenseite zum Schweißen ein das Laserlicht absorbierender Bereich vorgelagert.

Auch aus der JP 2011 031587 A ist es bekannt, Harzelemente durch Laserstrahlen miteinander zu verschweißen. Auch hier erhält der Fachmann keinen Hinweis auf die dichte Verbindung einer Filtermembran, die das zweite Kunststoffteil bildet, mit einem ersten Kunststoffteil, das bspw. als ein Gehäuseunterteil eines Filtergehäuses ausgebildet ist.

Aus der DD 84 474 A ist es bekannt, zwei Thermoplastfolien, die oberhalb einer lichtdurchlässigen Scheibe angeordnet sind und von einer Andruckrolle mit einer Lichtstrahlen absorbierenden Schicht gegen eine Abdeckung der Scheibe gedrückt und von fokussierten Lichtstrahlen eines Lichtstrahlers verschweißt werden.

Weiterhin ist aus der DE 102 56 565 A1 ein Verfahren zum Befestigen eines Filtermaterials auf einer Halteeinrichtung 6 bekannt, wobei die Anordnung der unten unter DE 102 11 782 A1 beschriebenen Vorrichtung entspricht. Bei dem Filtermaterial handelt es sich um ein Polymervlies, welches mit einem für einen Laser durchlässigen Harz, beispielsweise Acrylharz, imprägniert ist.

Aus der DE 102 11 782 A1 ist eine Vorrichtung mit einem Gehäuseunterteil und mit einem Filter bekannt, wobei der Filter mit einem umlaufenden Randbereich auf seiner dem Gehäuseunterteil zugewandten Unterseite durch Laserschweißen dicht mit einem Auflagerand des Gehäuseunterteils verbunden ist. Dabei ist das Gehäuseunterteil aus einem thermoplastischen Kunststoff ausgebildet, der Laserlicht absorbiert, während der Filter aus einem für Laserlicht transparenten Polymervlies ausgebildet ist. Zum Verbinden von Gehäuseunterteil und Filter wird der Filter mit seinem Randbereich auf einen Auflagerand des Gehäuseunterteils aufgesetzt und in einer Spannvorrichtung mit einem transparenten Niederhalter zusammengepresst, wobei der Randbereich des Filters durch Laserschweißen dicht mit dem Auflagerand des Gehäuseunterteils verbunden wird.

Nachteilig dabei ist, dass bei dieser Vorrichtung die Kunststoffe so ausgewählt sein müssen, dass nur eine unwesentliche Aufschmelzung des Filtermaterials bzw. des Vliesmaterials eintritt und die Schmelzpunkte und der die Absorptionskoeffizienten der Materialien entsprechend aufeinander abgestimmt sein müssen. Weiterhin nachteilig ist, dass durch die einseitige Durchdringung des Filtermaterials mit der Schmelze des Gehäuseunterteils die Verbindung der beiden Materialien nur bedingt sicher und dicht ist. Da der gesamte Filter aus einem Polymervlies ausgebildet ist, sind einerseits mikroporöse Membranfilter ausgeschlossen und andererseits sind nicht alle Polymervliese für die durchzuführenden Filtrationen geeignet.

Aus der DE 100 58 251 A1 ist eine Vorrichtung und ein Verfahren bekannt, bei dem ein Gehäuseunterteil und ein Filter durch Laserschweißen dicht miteinander verbunden werden. Dabei ist der Filter als eine Filtermembran ausgebildet, die an der Unterseite durch ein Verstärkungsvlies verstärkt ist. Dabei soll durch Eindringen von flüssigem Kunststoff des Gehäuseunterteils in das Verstärkungsvlies eine formschlüssige Verbindung des Filters mit dem Grundkörper erfolgen, wobei der Kunststoff des Grundkörpers Laserlicht in Wärme umwandelnde Stoffe (Absorber) aufweist und Laserlicht absorbierend ausgebildet ist.

Nachteilig bei dieser bekannten Vorrichtung und Verfahren ist, dass das Verstärkungsvlies gerade nicht schmelzbar sein darf, damit der flüssige Kunststoff des Grundkörpers in das Stützgewebe eindringen kann. Durch die an sich zum Laserschweißen unverträglichen Kunststoffe, erfolgt hier nur ein einseitiges Eindringen in das Stützgewebe, so dass die Verbindung relativ schwach ausgebildet ist.

### Aufgabenstellung

Es ist die Aufgabe der vorliegenden Erfindung, ein Verfahren zum Verbinden eines ersten Kunststoffteiles mit einem zweiten Kunststoffteil durch Laserschweißen anzugeben, das ohne unerwünschte absorbierende Zusatzstoffe in der fertigen Verbindung auskommt und kostengünstig mit handelsüblichen Diodenlasern mit zwischen 800 nm und 1000 nm liegenden Wellenlängen durchgeführt werden kann.

### Darlegung der Erfindung

Diese Aufgabe wird in Verbindung mit den Merkmalen des Oberbegriffs von Anspruch 1 dadurch gelöst, dass das zweite Kunststoffteil als eine Filtermembran ausgebildet ist, die an der Unterseite durch ein durch das Laserlicht schmelzbares Verstärkungsvlies verstärkt ist.

Das Verstärkungsvlies stellt dabei den eigentlichen Fügepartner zu dem Gehäuseunterteil dar. Überraschend hat sich gezeigt, dass bei Verwendung mindestens eines dünnen Kunststoffteiles es für den Schmelzprozess an der von beiden Kunststoffteilen gebildeten Fügestelle ausreichend ist, dem dünnen zweiten Kunststoffteil auf der dem ersten Kunststoffteil abgewandten Außenseite zum Schweißen eine das Laserlicht absorbierende, durch das Laserlicht nicht schmelzbare Matte vorzulagern. Nach dem Laserschweißen wird die aus den beiden Kunststoffteilen bestehende Vorrichtung von der Matte einfach abgehoben und weist keine absorbierenden Zusatzstoffe auf. Zudem kann die Matte kostengünstig wiederverwendet werden. Durch die laserabsorbierende Matte kann genug Hitze zum Schweißen erzeugt werden, so dass die Benutzung eines unerwünschten Absorbers zwischen den Kunststoffteilen überflüssig ist.

Die Dicke des dünnen Kunststoffteiles und die Energiedichte des Laserlichtes bzw. Laserstrahles sind aufeinander abgestimmt. Unter "dünn" wird eine Dicke des zweiten Kunststoffteiles verstanden, die einen ausreichenden Schmelzprozess an der Fügestelle der zu verbindenden Kunststoffteile zulässt.

Die Aufgabe wird weiter in Verbindung mit den Merkmalen des Oberbegriffs von Anspruch 2 dadurch gelöst, dass die beiden Kunststoffteile aus zum direkten Laserschweißen unverträglichen Kunststoffen ausgebildet sind, dass zwischen dem zweiten Kunststoffteil und dem ersten Kunststoffteil ein hochschmelzendes Vlies eingelegt wird und dass während des Laserschweißens die zu beiden Seiten des Vlieses anliegenden Schichten angeschmolzen und in das Vlies eingedrückt werden.

Im Sinne der vorliegenden Erfindung soll unter einem hochschmelzenden Vlies ein Vlies aus einem Kunststoff verstanden werden, der bei einer Schweißtemperatur, bei der die anliegenden Kunststoffschichten zum Schmelzen gebracht werden, seine Struktur im Wesentlichen beibehält, so dass die angeschmolzenen Kunststoffe der benachbarten Schichten in den Vlies eingedrückt werden können und nach dem Abkühlen eine feste und dichte Verbindung entsteht.

Bevorzugte Ausführungsformen sind Gegenstand der abhängigen Ansprüche.

Gemäß einer bevorzugten Ausführungsform der Erfindung ist das erste Kunststoffteil ein Gehäuseunterteil mit einem Auflagerand, auf dem das als Filter ausgebildete zweite Kunststoffteil mit einem an seiner Unterseite angeordneten Randbereich aufgesetzt wird. Damit wird aus dem Gehäuseunterteil und dem Filter eine Vorrichtung, die die obigen Vorteile aufweist und die durch Verbindung mit einem Gehäuseoberteil zu einer Filtervorrichtung komplettiert werden kann.

Gemäß einer weiteren bevorzugten Ausführungsform der Erfindung ist die nicht schmelzbare Matte elastisch ausgebildet. Dies gleicht zum einen eventuelle Spannungen in der Fixiervorrichtung zum Laserschweißen aus und schützt zum anderen das dünne zweite Kunststoffteil, beispielsweise den Filter. Auch lässt sich eine elastische Matte leichter nach dem Schweißvorgang von dem zweiten Kunststoffteil trennen.

Nach einer weiteren bevorzugten Ausführungsform der Erfindung wird als nicht schmelzbare Matte eine grau oder schwarz eingefärbte Matte dem zweiten Kunststoffteil vorgelagert, die bevorzugt aus Silikon ausgebildet ist. Solche Matten haben sich als besonders günstig erwiesen.

Gemäß einer weiteren bevorzugten Ausführungsform der Erfindung ist die Dicke des dünnen zweiten Kunststoffteiles mit der Energiedichte des Laserlichts so abgestimmt, dass die beiden Kunststoffteile in ihrem Fügebereich geschmolzen werden.

Die miteinander zu verbindenden Kunststoffteile sollten geeignet sein, miteinander durch Laserschweißen verbunden zu werden.

Bevorzugt ist das hochschmelzende Vlies aus Polyetheretherketon oder Polyphenylensulfid oder Polyamide oder Polyetherimid oder Polyethylenterephthalat ausgebildet.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht im Schnitt und Explosionsdarstellung einer Vorrichtung mit einem ersten als Gehäuseunterteil ausgebildeten Kunststoffteil und einem zweiten als Filter ausgebildeten Kunststoffteil;
- Figur 2:: eine Seitenansicht im Schnitt der Vorrichtung von Figur 1 mit gestrichelt dargestellten Niederhalter einer Laserschweißvorrichtung und einem gestrichelt dargestellten Laserstrahl;
- Figur 3:: eine Seitenansicht der fertigen Vorrichtung von Figur 2;
- Figur 4:: eine Seitenansicht im Schnitt einer Filtervorrichtung, bestehend aus der Vorrichtung von Figur 3 und einem aufgesetzten und verschweißten Gehäuseoberteil;
- Figur 5:: eine Seitenansicht im Schnitt und Explosionsdarstellung einer weiteren Vorrichtung mit einem ersten als Gehäuseunterteil ausgebildeten Kunststoffteil und einem zweiten als Filter ausgebildeten Kunststoffteil wobei zwischen dem zweiten Kunststoffteil und dem ersten Kunststoffteil ein hochschmelzendes Vlies angeordnet ist;
- Figur 6:: eine Seitenansicht im Schnitt der Vorrichtung von Figur 5 mit gestrichelt dargestelltem Niederhalter einer Schweißvorrichtung und gestrichelt dargestelltem Laserstrahl;
- Figur 7:: eine Seitenansicht im Schnitt der Vorrichtung von Figur 6 im verschweißten Zustand;
- Figur 8:: eine Seitenansicht im Schnitt der Filtervorrichtung von Figur 7 mit aufgesetztem und verschweißtem Gehäuseoberteil; und
- Figur 9:: eine Seitenansicht im Schnitt und Ausriss in vergrößerter Darstellung eines Filters, bestehend aus einer Filtermembran mit Verstärkungsvlies an der Unterseite der Filtermembran.

### Beschreibung bevorzugter Ausführungsformen

Eine Vorrichtung 1 besteht im Wesentlichen aus einem ersten als Gehäuseunterteil ausgebildeten Kunststoffteil 2 und einem zweiten als Filter ausgebildeten Kunststoffteil 4.

Das zweite Kunststoffteil 4 weist eine Filtermembran 5 auf, die an ihrer Unterseite durch ein schmelzbares (durch Laserschweißen/Laserdurchstrahlschweißen) Verstärkungsvlies 6 verstärkt ist.

Das erste Kunststoffteil 2 und das zweite Kunststoffteil 4 sind für Laserlicht 7 transparent ausgebildet.

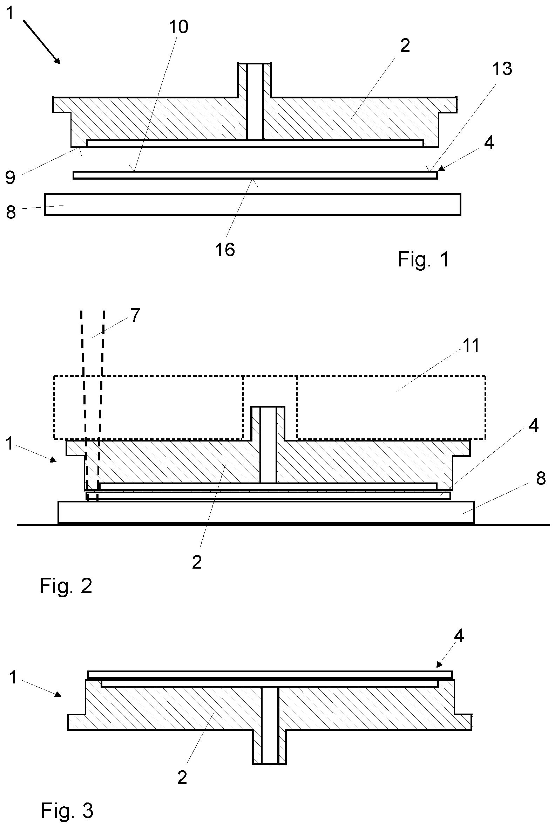

Zur Herstellung der Vorrichtung 1 wird entsprechend Figur 2 in einer Laserschweißvorrichtung auf einer Unterlage eine das Laserlicht 7 absorbierende nicht schmelzbare Matte 8 positioniert. Auf die Matte 8 wird in einem Folgeschritt das zweite Kunststoffteil 4 mit seiner dem ersten Kunststoffteil 2 abgewandten Außenseite 16 aufgesetzt. Auf ihrer der Außenseite 16 abgewandte Unterseite 10 weist das zweite Kunststoffteil 4 einen Randbereich 13 auf, auf den in einem weiteren Schritt das erste Kunststoffteil 2 mit seinem dem zweiten Kunststoffteil 4 zugewandten Auflagerand 9 aufgesetzt wird.

Die Vorrichtung 1 wird in der Laserschweißvorrichtung durch deren für das Laserlicht 7 transparenten Niederhalter 11 zusammengepresst. Der Randbereich 13 des zweiten Kunststoffteils 4 wird durch Laserschweißen dicht mit dem Auflagerand 9 des Gehäuseunterteils 2 verbunden.

Auf die fertige Vorrichtung 1, 1' wird dann in bekannter Weise ein Gehäuseoberteil 14, 14' aufgesteckt und mit dieser in bekannter Weise verschweißt. Damit bildet die Vorrichtung 1, 1' zusammen mit dem Gehäuseoberteil 14, 14' eine Filtervorrichtung 15, 15'.

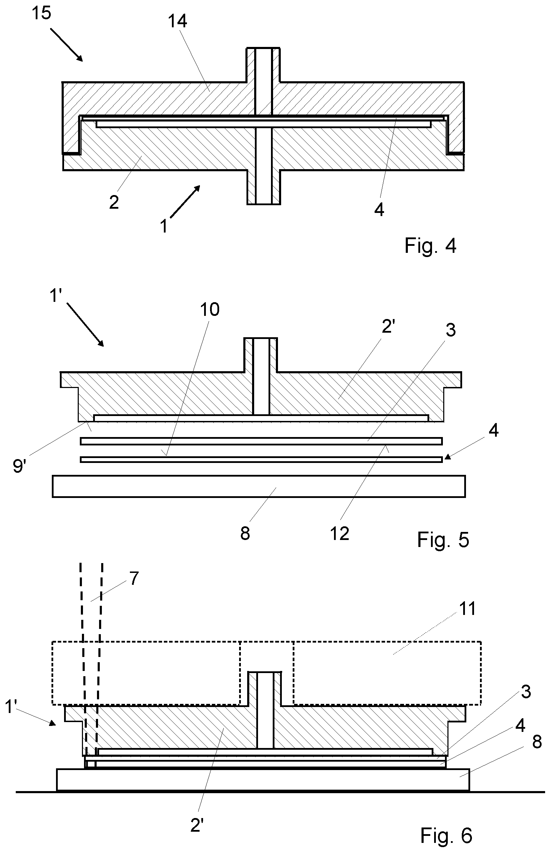

Entsprechend dem Ausführungsbeispiel der Figuren 5 bis 8 sind die beiden Kunststoffteile 2', 4 aus zum direkten Laserschweißen unverträglichen Kunststoffen ausgebildet. Dabei wird zwischen dem zweiten Kunststoffteil 4 und dem ersten Kunststoffteil 2' ein hochschmelzendes Vlies (3) eingelegt. Während des Laserschweißens werden die zu beiden Seiten des Vlieses (3) anliegenden Schichten angeschmolzen und in das Vlies (3) eingedrückt. Das Verstärkungsvlies 3 der Filtermembran 5 kann dabei beispielsweise aus Polypropylen ausgebildet sein. Das erste Kunststoffteil 2' ist in dem Ausführungsbeispiel der Figuren 5 bis 8 us Polystyrol ausgebildet. Für das hochschmelzende Vlies 3 können beispielsweise Polyetheretherketon oder Polyphenylensulfid oder Polyamide oder Polyetherimid oder Polyethylenterephthalat verwendet werden.

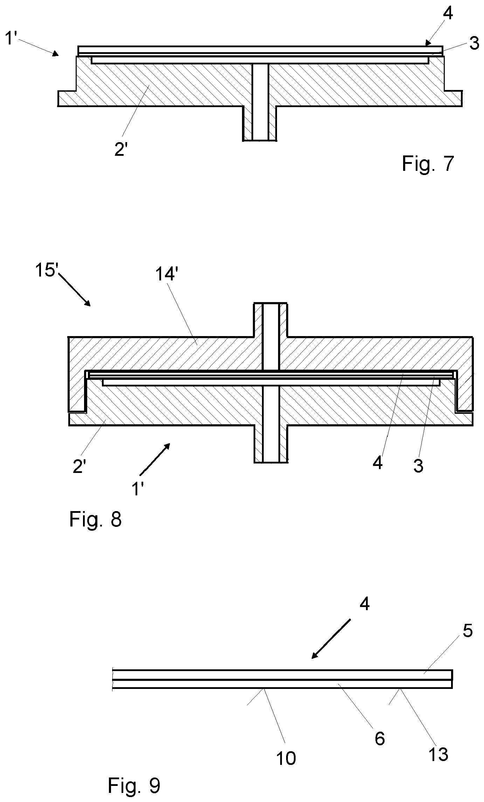

Das zweite Kunststoffteil 4 weist entsprechend Figur 9 an seiner Unterseite 10 ein Verstärkungsvlies 6 auf, das beim Laserschweißen zumindest angeschmolzen wird. Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1, 1': Vorrichtung
- 2, 2': erstes Kunststoffteil (Gehäuseunterteil)
- 3: Vlies
- 4: zweites Kunststoffteil (Filter)
- 5: Filtermembran von 4
- 6: Verstärkungsvlies von 4
- 7: Laserlicht
- 8: nicht schmelzbare Matte
- 9, 9': Auflagerand von 2
- 10: Unterseite von 4
- 11: Niederhalter
- 12: Oberseite von 3
- 13: Randbereich von 4
- 14, 14': Gehäuseoberteil
- 15, 15': Filtervorrichtung
- 16: Außenseite von 4

## Patentansprüche

1. Verfahren zum Verbinden eines ersten Kunststoffteiles (2, 2') mit einem zweiten Kunststoffteil (4) durch Laserschweißen, wobei beide Kunststoffteile (2, 2', 4) aufeinander positioniert, in einer Spannvorrichtung mit einem transparenten Niederhalter (11) zusammengepresst und durch Laserschweißen mit einem Laserlicht (7) dicht miteinander verbunden werden,
wobei beide Kunststoffteile (2, 2', 4) für das Laserlicht (7) transparent ausgebildet sind,
wobei mindestens das zweite Kunststoffteil (4) dünn ausgebildet ist,
wobei dem zweiten Kunststoffteil (4) auf der dem ersten Kunststoffteil (2) abgewandten Außenseite (16) zum Schweißen eine das Laserlicht (7) absorbierende, durch das Laserlicht (7) nicht schmelzbare Matte (8) vorgelagert wird, die sich nicht mit dem anliegenden zweiten Kunststoffteil (4) verbindet und wobei das Laserlicht (7) über das erste Kunststoffteil (2) dem zweiten Kunststoffteil (4) zugeführt wird.
**dadurch gekennzeichnet,**
**dass** das zweite Kunststoffteil (4) als eine Filtermembran (5) ausgebildet ist, die an der Unterseite (10) durch ein durch das Laserlicht schmelzbares Verstärkungsvlies (6) verstärkt ist.

2. Verfahren zum Verbinden eines ersten Kunststoffteiles (2, 2') mit einem zweiten Kunststoffteil (4) durch Laserschweißen, wobei beide Kunststoffteile (2, 2', 4) aufeinander positioniert, in einer Spannvorrichtung mit einem transparenten Niederhalter (11) zusammengepresst und durch Laserschweißen mit einem Laserlicht (7) dicht miteinander verbunden werden,
wobei beide Kunststoffteile (2, 2', 4) für das Laserlicht (7) transparent ausgebildet sind,
wobei mindestens das zweite Kunststoffteil (4) dünn ausgebildet ist,
wobei dem zweiten Kunststoffteil (4) auf der dem ersten Kunststoffteil (2) abgewandten Außenseite (16) zum Schweißen eine das Laserlicht (7) absorbierende, durch das Laserlicht (7) nicht schmelzbare Matte (8) vorgelagert wird, die sich nicht mit dem anliegenden zweiten Kunststoffteil (4) verbindet und wobei das Laserlicht (7) über das erste Kunststoffteil (2) dem zweiten Kunststoffteil (4) zugeführt wird.
**dadurch gekennzeichnet,**
**dass** die beiden Kunststoffteile (2', 4) aus zum direkten Laserschweißen unverträglichen Kunststoffen ausgebildet sind,
**dass** zwischen dem zweiten Kunststoffteil (4) und dem ersten Kunststoffteil (2') ein hochschmelzendes Vlies (3) eingelegt wird und
**dass** während des Laserschweißens die zu beiden Seiten des Vlieses (3) anliegenden Schichten angeschmolzen und in das Vlies (3) eingedrückt werden.

3. Verfahren nach Anspruch 1 oder 2,
**dadurch gekennzeichnet,**
**dass** das erste Kunststoffteil (2) ein Gehäuseunterteil mit einem Auflagerand (9, 9') ist, auf dem das als Filter ausgebildete zweite Kunststoffteil (4) mit einem an seiner Unterseite (10) angeordneten Randbereich (13) aufgesetzt wird.

4. Verfahren nach einem der Ansprüche 1 bis 3,
**dadurch gekennzeichnet,**
**dass** die nicht schmelzbare Matte (8) elastisch ausgebildet ist.

5. Verfahren nach einem der Ansprüche 1 bis 4,
**dadurch gekennzeichnet,**
**dass** als nicht schmelzbare Matte (8) eine grau oder schwarz eingefärbte Matte dem zweiten Kunststoffteil (4) vorgelagert wird.

6. Verfahren nach einem der Ansprüche 1 bis 5,
**dadurch gekennzeichnet,**
**dass** die nicht schmelzbare Matte (8) eine Silikonmatte ist.

7. Verfahren nach einem der Ansprüche 1 bis 6,
**dadurch gekennzeichnet,**
**dass** die Dicke des zweiten Kunststoffteiles (4) mit der Energiedichte des Laserlichts (7) abgestimmt ist und
**dass** die beiden Kunststoffteile (2, 2', 4) in ihrem Fügebereich geschmolzen werden.

8. Verfahren nach einem der Ansprüche 1 bis 7,
**dadurch gekennzeichnet,**
**dass** als Laser ein Diodenlaser mit einer Wellenlänge zwischen 800 nm und 1000 nm verwendet wird.

9. Verfahren nach einem der Ansprüche 2 bis 8,
**dadurch gekennzeichnet,**
**dass** das hochschmelzende Vlies (3) aus Polyetheretherketon oder Polyphenylensulfid oder Polyamide oder Polyetherimid oder Polyethylenterephthalat ausgebildet ist.

## Claims

1. A method for connecting a first plastic part (2, 2') to a second plastic part (4) by laser welding, wherein the two plastic parts (2, 2', 4) are positioned on one another, pressed together in a clamping device by a transparent holding-down element (11) and tightly bonded to one another by laser welding with a laser light (7),
wherein the two plastic parts (2, 2', 4) are made transparent to laser light (7), wherein at least the second plastic part (4) is made thin, wherein, for the welding, the second plastic part (4) has placed in front of it, on the outer side (16) that is facing away from the first plastic part (2), a mat (8) that absorbs the laser light (7), cannot be melted by the laser light (7) and does not become connected to the second plastic part (4) in contact with it, and wherein the laser light (7) is fed to the second plastic part (4) via the first plastic part (2).,
**characterized in that**
the second plastic part (4) is made as a filter membrane (5) that is reinforced on the underside (10) by a reinforcing nonwoven (6) that can be melted by the laser light.

2. A method for connecting a first plastic part (2, 2') to a second plastic part (4) by laser welding, wherein the two plastic parts (2, 2', 4) are positioned on one another, pressed together in a clamping device by a transparent holding-down element (11) and tightly bonded to one another by laser welding with a laser light (7),
wherein the two plastic parts (2, 2', 4) are made transparent to laser light (7), wherein at least the second plastic part (4) is made thin, wherein, for the welding, the second plastic part (4) has placed in front of it, on the outer side (16) that is facing away from the first plastic part (2), a mat (8) that absorbs the laser light (7), cannot be melted by the laser light (7) and does not become connected to the second plastic part (4) in contact with it, and wherein the laser light (7) is fed to the second plastic part (4) via the first plastic part (2).,
**characterized in that**
the two plastic parts (2', 4) are made of plastics that are not compatible for direct laser welding,
**in that** a high-melting nonwoven (3) is inserted between the second plastic part (4) and the first plastic part (2'),
and **in that** during laser welding the layers abutting on both sides of the nonwoven (3) are fused to and pressed into the nonwoven (3).

3. The method according to claim 1 or 2,
**characterized in that**
the first plastic part (2) is a lower housing part with a supporting edge (9, 9') on which is placed an edge region (13) arranged on the underside (10) of the second plastic part (4) which is made as a filter.

4. The method according to any of claims 1 to 3,
**characterized in that**
the mat (8) that cannot be melted is made elastic.

5. The method according to any of claims 1 to 4,
**characterized in that**
a gray or black-colored mat is placed in front of the second plastic part (4) as the mat (8) that cannot be melted.

6. The method according to any of claims 1 to 5,
**characterized in that**
the mat (8) that cannot be melted is a silicone mat.

7. The method according to any of claims 1 to 6,
**characterized in that**
the thickness of the second plastic part (4) is adapted to the energy density of the laser light (7), and
**in that** the two plastic parts (2, 2', 4) are melted in their joining region.

8. The method according to any of claims 1 to 7,
**characterized in that**
a laser diode with a wave length between 800 nm and 1000 nm is used as laser.

9. The method according to any of claims 2 to 8,
**characterized in that**
the high-melting nonvowen (3) is made of polyetheretherketone or polyphenylene sulfide or polyamide or polyetherimide or polyethylene terephthalate.

## Revendications

1. Procédé pour assembler un premier élément plastique (2, 2') avec un deuxième élément plastique (4) par soudage laser, les deux éléments plastiques (2, 2', 4) étant superposés, comprimés ensemble dans un dispositif de serrage au moyen d'un serre-flan (11) transparent et assemblés de manière étanche par soudage à la lumière laser (7), les deux éléments plastiques (2, 2', 4) étant transparents à la lumière laser (7),au moins le deuxième élément plastique (4) étant mince, un mat (8), qui absorbe la lumière laser (7) et que la lumière laser (7) ne peut pas faire fondre, étant placé devant la face externe (16) du deuxième élément plastique (4) opposée au premier élément plastique (2) pour le soudage, ce mat ne se liant pas au deuxième élément plastique (4) adjacent, et la lumière laser (7) étant dirigée par l'intermédiaire du premier élément plastique (2) vers le deuxième élément plastique (4),
**caractérisé en ce que**
le deuxième élément plastique (4) est réalisé sous la forme d'une membrane filtrante (5), qui est renforcée sur le côté inférieur (10) par un non-tissé de renforcement (6) que la lumière laser peut faire fondre.

2. Procédé pour assembler un premier élément plastique (2, 2') avec un deuxième élément plastique (4) par soudage laser, les deux éléments plastiques (2, 2', 4) étant superposés, comprimés ensemble dans un dispositif de serrage au moyen d'un serre-flan (11) transparent et assemblés de manière étanche par soudage à la lumière laser (7), les deux éléments plastiques (2, 2', 4) étant transparents à la lumière laser (7), au moins le deuxième élément plastique (4) étant mince,un mat (8), qui absorbe la lumière laser (7) et que la lumière laser (7) ne peut pas faire fondre, étant placé devant la face externe (16) du deuxième élément plastique (4) opposée au premier élément plastique (2) pour le soudage, ce mat ne se liant pas au deuxième élément plastique (4) adjacent, et la lumière laser (7) étant dirigée par l'intermédiaire du premier élément plastique (2) vers le deuxième élément plastique (4),
**caractérisé en ce que** les deux éléments plastiques (2', 4) sont constitués de matières plastiques incompatibles avec le soudage direct au laser,
**en ce qu'**un non-tissé (3) à point de fusion élevé est inséré entre le deuxième élément plastique (4) et le premier élément plastique (2'), et **en ce que**, pendant le soudage au laser, les couches contiguës aux deux côtés du non-tissé (3) sont réunies par fusion et comprimées dans le non-tissé (3).

3. Procédé selon la revendication 1 ou 2, **caractérisé en ce que** le premier élément plastique (2) est un élément inférieur de boîtier muni d'un bord d'appui (9, 9') sur lequel le deuxième élément plastique (4), réalisé sous forme de filtre, est monté par une région de bord (13) disposée sur son côté inférieur (10).

4. Procédé selon l'une quelconque des revendications 1 à 3, **caractérisé en ce que** le mat (8) qui ne peut pas être fondu est élastique.

5. Procédé selon l'une quelconque des revendications 1 à 4, **caractérisé en ce qu'**un mat coloré en gris ou en noir est placé devant le deuxième élément plastique (4) en tant que mat (8) qui ne peut pas être fondu.

6. Procédé selon l'une quelconque des revendications 1 à 5, **caractérisé en ce que** le mat (8) qui ne peut pas être fondu est un mat de silicone.

7. Procédé selon l'une quelconque des revendications 1 à 6, **caractérisé en ce que** l'épaisseur du deuxième élément plastique (4) est adaptée à la densité énergétique de la lumière laser (7), et **en ce que** les deux éléments plastiques (2, 2', 4) sont fondus dans leur région d'assemblage.

8. Procédé selon l'une quelconque des revendications 1 à 7, **caractérisé en ce qu'**une diode laser ayant une longueur d'onde comprise entre 800 nm et 1000 nm est utilisée en tant que laser.

9. Procédé selon l'une quelconque des revendications 2 à 8, **caractérisé en ce que** le non-tissé (3) à point de fusion élevé est constitué de poly (étheréthercétone) ou de poly (phénylène sulfure) ou de polyamide ou de polyétherimide ou de polyéthylène téréphtalate.
